# EUROPEAN PATENT APPLICATION

(11) **EP 3 306 355 A1**
(43) Date of publication of application: **11.04.2018**
(21) Application number: 16818073.5
(22) Date of filing: 01.07.2016
(51) Int. Cl.: G02B 1/115, B32B 7/02, B32B 9/00, G02C 7/02

(54) **OPTICAL PRODUCT, PLASTIC LENS, AND EYE GLASSES**

(30) Priority: 02.07.2015 JP 2015133771
(71) Applicant: Tokai Optical Co., Ltd., Okazaki-shi, Aichi 444-2192 (JP)
(72) Inventor: YOSHIDA, Takuro, Okazaki-shi, Aichi 444-2192 (JP)
(74) Representative: Prüfer & Partner mbB Patentanwälte · Rechtsanwälte
(86) International application number: PCT/JP2016/069677
(87) International publication number: WO 2017/002965

(57) **Abstract**

[Object] To provide an optical product and the like which can achieve both excellent antireflective performance and high heat resistance while being simple in structures.

[Solution] An optical product is provided with an optical multilayer film formed on one or both of surfaces of a base, directly or via an intermediate film. The optical multilayer film is obtained by alternately layering low refractive index layers and high refractive index layers up to five layers or more in total. The high refractive index layers include zirconium dioxide layers each having an atmospheric refractive index not less than 2.11 with respect to light having a wavelength of 500 nanometers. The total of physical thicknesses of the zirconium dioxide layers each having the atmospheric refractive index not less than 2.11 is not less than 20% of the total physical thickness of the optical multilayer film.

## Description

### TECHNICAL FIELD

The present invention relates to optical products including plastic lenses including sunglass lenses, and eye glasses (spectacles) including sunglasses that use the plastic lenses.

### BACKGROUND ART

A plastic lens for a visible region, having improved heat resistance, has been disclosed in Patent Literature 1.

The lens disclosed in Patent Literature 1 includes an antireflection film in which low refractive index layers and high refractive index layers are alternately layered up to seven layers or more. The third layer from a lens base is an SiO₂ layer as a low refractive index layer and is formed to be thicker than other layers, whereby heat resistance is improved while providing advantageous optical characteristics with reduced reflectance in the visible region.

### CITATION LIST

### [PATENT LITERATURE]

[PTL 1] Japanese Patent No. 5211289

### SUMMARY OF THE INVENTION

### PROBLEMS TO BE SOLVED BY THE INVENTION

Although the lens disclosed in Patent Literature 1 has excellent heat resistance while having a simple structure and sufficient antireflective performance, there is room for further improvement of the heat resistance.

Therefore, the present invention has an object to provide an optical product, a plastic lens, and spectacles which are excellent in antireflective performance and heat resistance while being simple in structures.

### SOLUTION TO THE PROBLEMS

In order to attain the aforementioned object, the invention as in claim 1 provides an optical product having an optical multilayer film formed on one or both of surfaces of a base, directly or via an intermediate film, wherein the optical multilayer film is obtained by alternately layering low refractive index layers and high refractive index layers up to five layers or more in total, the high refractive index layers include zirconium dioxide layers each having an atmospheric refractive index not less than 2.11 with respect to light having a wavelength of 500 nanometers, and a total of physical thicknesses of the zirconium dioxide layers each having the atmospheric refractive index not less than 2.11 is not less than 20% of a total physical thickness of the optical multilayer film.

The invention as in claim 2 is characterized in that in the above invention, the low refractive index layers include silicon dioxide layers each having an atmospheric refractive index not less than 1.476 with respect to light having a wavelength of 500 nanometers.

The invention as in claim 3 is characterized in that, in the above invention, the atmospheric refractive index, not less than 2.11, of the zirconium dioxide layers is not more than 2.18.

The invention as in claim 4 is characterized in that, in the above invention, the atmospheric refractive index, not less than 1.476, of the silicon dioxide layers is not more than 1.484.

The invention as in claim 5 is characterized in that, in the above invention, the optical multilayer film comprises only silicon dioxide and zirconium dioxide.

The invention as in claim 6 is characterized in that, in the above invention, the zirconium dioxide layers each having the atmospheric refractive index not less than 2.11 and the silicon dioxide layers each having the atmospheric refractive index not less than 1.476 are formed by ion-assisted vapor deposition.

The invention as in claim 7 is a plastic lens using the optical product according to the above invention.

The invention as in claim 8 is spectacles using the plastic lens according to the above invention.

### ADVANTAGEOUS EFFECTS OF THE INVENTION

According to the present invention, it is possible to provide an optical product, a plastic lens, and spectacles which can provide both excellent antireflective performance and high heat resistance while being simple in structures.

### BRIEF DESCRIPTION OF THE DRAWINGS

[FIG. 1] FIG. 1 shows a graph representing a spectral reflectance distribution in a visible region according to Examples A1 to A3.
[FIG. 2] FIG. 2 shows a graph representing a spectral reflectance distribution in a visible region according to Comparative Examples A1 and A2.
[FIG. 3] FIG. 3 shows a graph representing a spectral reflectance distribution in a visible region according to Example B 1.
[FIG. 4] FIG. 4 shows a graph representing a spectral reflectance distribution in a visible region according to Comparative Example B 1.
[FIG. 5] FIG. 5 shows a graph representing a spectral reflectance distribution in a visible region according to Examples C1 to C4.
[FIG. 6] FIG. 6 shows a graph representing a spectral reflectance distribution in a visible region according to Comparative Examples C1 to C4.
[FIG. 7] FIG. 7 shows a graph representing a spectral reflectance distribution in a visible region according to Examples D1 to D2.
[FIG. 8] FIG. 8 shows a graph representing a spectral reflectance distribution in a visible region according to Comparative Examples D1 to D2.

### DESCRIPTION OF EMBODIMENTS

### BEST MODE FOR CARRYING OUT THE INVENTION

An exemplary embodiment of the present invention will be described below with reference to the drawings as appropriate. The present invention is not limited to the exemplary embodiment described below.

An optical product according to the present invention has an optical multilayer film on one or both of the surfaces of a base of the optical product.

In the present invention, the base may be made of any material, and is preferably translucent. Examples of the material (base material) of the base include a polyurethane resin, a thiourethane resin, an episulfide resin, a polycarbonate resin, a polyester resin, an acrylic resin, a polyether sulfone resin, a poly(4-methylpentene-1) resin, a diethylene glycol bis(allyl carbonate) resin, and a combination thereof. Further, examples of the material include, as a preferable material (for, in particular, a spectacle lens) having a high refractive index, an episulfide resin obtained by addition-polymerization of an episulfide group with polythiol and/or a sulfur-containing polyol, and a combination of the episulfide resin and another resin.

The optical multilayer film has the following characteristics as appropriate. When the optical multilayer films are formed on both of the surfaces of the base, both of the films preferably have the following characteristics, and more preferably, have the same layered structure.

That is, the optical multilayer film has a structure including five or more layers obtained by alternately layering low refractive index layers and high refractive index layers. Assuming that a most base-side layer (a layer closest to the base) is the first layer, odd-numbered layers are the low refractive index layers and even-numbered layers are high refractive index layers.

The low refractive index layers are formed by using silica (silicon dioxide, SiO₂), and the high refractive index layers are formed by using zirconia (zirconium dioxide, ZrO₂).

The high refractive index layers are formed as follows. That is, of the total of the physical thicknesses of all the high refractive index layers (zirconia) (the total physical thickness of the high refractive index layers), the subtotal of the physical thicknesses of the high refractive index layers, each having an atmospheric refractive index not less than 2.11 with respect to light having a wavelength of 500 nanometers (nm), is not less than 20 percent (%) of the total physical thickness of the optical multilayer film.

Further, each of the low refractive index layers (silica) preferably has an atmospheric refractive index not less than 1.476 at the wavelength of 500 nm.

The low refractive index layers and the high refractive index layers are formed by a vacuum deposition method, an ion-assisted vapor deposition method, an ion plating method, a sputtering method, or the like, and the atmospheric refractive indexes thereof vary depending on the formation method, settings during the formation, and the like. The low refractive index layers and the high refractive index layers are preferably formed by the ion-assisted vapor deposition method, from the viewpoint of easily obtaining the atmospheric refractive indexes described above.

When the atmospheric refractive index of the high refractive index layer is less than 2.11, the optical multilayer film is relatively degraded mainly in heat resistance. The same applies to a case where the atmospheric refractive index of the low refractive index layer is less than 1.476.

When the atmospheric refractive index of the high refractive index layer exceeds 2.18, this atmospheric refractive index is relatively greatly different from the normal atmospheric refractive index of zirconia, which may cause significant increase in cost required for film formation. The same applies to a case where the atmospheric refractive index of the low refractive index layer exceeds 1.484.

In the present invention, another kind of film such as a hard coating film or an antifouling film (water repellent film/oil repellent film) may be additionally provided at at least one of a position between the optical multilayer film and the base and a position on the surface of the optical multilayer film. When the optical multilayer films are formed on both of the surfaces of the base, the types of the additional films may be made different from each other, or presence/absence of the additional films may be changed.

When a hard coating film is adopted as the film to be additionally provided between the optical multilayer film and the base, the hard coating film is preferably formed by uniformly applying a hard coating solution to the surface of the base.

For the hard coating film, an organosiloxane resin containing inorganic oxide particles can be preferably used. An organosiloxane resin obtained by hydrolyzing and condensing an alkoxysilane is preferred as the organosiloxane resin. Further, specific examples of the organosiloxane resin include γ-glycidoxypropyltrimethoxysilane, γ-glycidoxypropyltriethoxysilane, methyl trimethoxysilane, ethyl silicate, and a combination thereof. The hydrolysis condensates of the alkoxysilanes are manufactured by hydrolyzing the alkoxysilane compounds or a combination thereof by an acidic aqueous solution such as hydrochloric acid.

Meanwhile, as an exemplary material of the inorganic oxide particles, specifically, a sol of zinc oxide, silicon dioxide (silica particulates), aluminum oxide, titanium oxide (titania particulates), zirconium oxide (zirconia particulates), tin oxide, beryllium oxide, antimony oxide, tungsten oxide, or cerium oxide, or mixed crystals of two or more of the sols, can be used. The diameter of the inorganic oxide particle is preferably not less than 1 nm and not greater than 100 nm, and more preferably, not less than 1 nm and not greater than 50 nm, from the viewpoint of ensuring transparency of the hard coating film. Further, an amount (concentration) of the inorganic oxide particles to be blended is preferably not less than 40% by weight of all the components of the hard coating film and not greater than 60% by weight thereof, from the viewpoint of ensuring appropriate levels of hardness and toughness of the hard coating film. In addition, for example, at least one of an acetylacetone metal salt and an ethylenediaminetetraacetic acid metal salt can be added to the hard coating solution as a curing catalyst. Further, a surfactant, a colorant, a solvent, or the like can be added to the hard coating solution, according to need for, for example, ensuring adhesion to the base, facilitating formation, and coloring with a desired (semi)transparent color.

The physical film thickness of the hard coating film is preferably not less than 0.5 µm (micrometer) and not greater than 4.0 µm. The lower limit of the film thickness range is defined because it is difficult to obtain sufficient hardness when the thickness is less than this lower limit. Meanwhile, the upper limit of the film thickness range is defined because a risk that a problem regarding physical properties such as generation of cracking or fragility arises is significantly increased when the thickness is greater than this upper limit.

Further, a primer film may be additionally provided between the hard coating film and the base surface, from the viewpoint of improving the adhesion of the hard coating film. Examples of a material of the primer film include a polyurethane-based resin, an acrylic resin, a methacrylic resin, an organosilicon resin, and a combination thereof. The primer film is preferably formed by uniformly applying a primer solution to the surface of the base. The primer solution is a solution obtained by mixing the resin material described above and inorganic oxide particles in water or an alcohol solvent.

In the optical product described above, preferably, the base is a plastic lens base, and the optical product is a plastic lens. Further, spectacles that are excellent in heat resistance while preventing reflection of light in the visible region can be produced at relatively low cost by using the plastic lens.

### EXAMPLES

### [Examples A1 to A3 and Comparative Examples A1 and A2]

Next, Examples A1 to A3 of the present invention according to the above-described embodiment and Comparative Examples A1 and A2 that do not belong to the present invention, will be described. The embodiment of the present invention is not limited to the examples described below.

On plastic lens bases of the same type and intermediate films of the same type, different types of optical multilayer films were formed to produce Examples A1 to A3 and Comparative Examples A1 and A2 of plastic lenses. The intermediate films and the optical multilayer films were formed on both surfaces of each plastic lens base, and the intermediate films/the optical multilayer films on the respective surfaces of the same plastic lens base had the same film structure.

Each plastic lens base was an aspheric lens base having a round shape of a standard size as a spectacle plastic lens, and having the power of S-2.00. Each plastic lens base was made of an episulfide resin (refractive index: 1.76, Abbe number: 31).

The intermediate films were primer films formed by application of a primer solution, and hard coating films formed by application of a hard coating solution.

Each primer film contacting the plastic lens base was produced as follows.

First, 25 g (grams) of block-type polyisocyanate (Coronate 2529 manufactured by Nippon Polyurethane Industry Co., Ltd.), 18 g of polyester polyol (Nipporan 1100 manufactured by Nippon Polyurethane Industry Co., Ltd.), and 100 g of ethyl cellosolve were mixed in a container.

Next, 140 g of a composite sol composed of tin oxide and tungsten oxide and 0.15 g of a silicone-based surfactant were added to the mixture, and a primer solution was obtained through sufficient stirring and mixing. The composite sol composed of tin oxide and tungsten oxide is a methanol-dispersed sol in which the average particle size is in a range not less than 10 nm and not greater than 15 nm, the weight ratio is 100 (tin oxide) : 40 (tungsten oxide), and the solid content is 30%.

Then, the primer solution was applied to each surface of the plastic lens base as follows.

That is, the primer solution was uniformly applied throughout the surface of the plastic lens base by a spin coating method, and was left as it was in an environment of 120°C for 0.5 hours, whereby the primer solution was heat-cured.

Each of the primer films formed as described above had the physical thickness of 1 µm.

Each hard coating film contacting the primer film was produced as follows.

First, 206 g of methanol, 300 g of a methanol-dispersed titania sol (manufactured by JGC Catalysts and Chemicals Ltd., solid content: 30%), 60 g of y-glycidoxypropyltrimethoxysilane, 30 g of y-glycidoxypropylmethyldiethoxysilane, and 60 g of tetraethoxysilane were mixed in a container, and 0.01 N (normality) of a hydrochloric acid aqueous solution was dropped into the mixed solution. The resultant mixed solution was stirred and hydrolyzed. Then, 0.5 g of a flow regulating agent and 1.0 g of a catalyst were added, and the resultant mixed solution was sufficiently stirred at room temperature, thereby producing the hard coating solution.

This hard coating solution was applied as follows to each surface of the plastic lens base on which the primer film was formed.

That is, the hard coating solution was uniformly applied by a spin coating method, and was left as it was in an environment of 120°C for 1.5 hours, whereby the hard coating solution was heat-cured.

Each of the hard coating films formed as described above had the physical film thickness of 2.5 µm.

Each optical multilayer film was formed as follows.

Each of the optical multilayer films according to Examples A1 to A3 and Comparative Examples A1 and A2 was formed by alternately depositing low refractive index layers (SiO₂) and high refractive index layers (ZrP₂) up to five layers in total, with the layer closest to the base being a first layer that is a low refractive index layer. The physical thicknesses of the respective layers in each optical multilayer film are as represented in the following [Table 1].

**[Table 1]**

| | Material | Physical thickness [nm] |
|---|---|---|
| First layer | SiO₂ | 155 |
| Second layer | ZrO₂ | 30 |
| Third layer | SiO₂ | 30 |
| Fourth layer | ZrO₂ | 40 |
| Fifth layer | SiO₂ | 95 |
| Total of SiO₂ | | 280 |
| Total of ZrO₂ | | 70 |
| Total thickness | | 350 |

In the optical multilayer films, the refractive indexes of the low refractive index layers and the high refractive index layers were made different from each other. In order to increase the refractive indexes, ion assist was performed when each layer in the optical multilayer film was deposited. Oxygen ions (ionized oxygen gas) were used as ions.

The refractive indexes are varied depending on presence/absence of ion-assisted irradiation or by changing ion-assist conditions. Generally, the refractive indexes are increased when the ion assist is performed. When the ion assist is performed, if, for example, the ion-assisted acceleration current value is increased, the refractive indexes of the low refractive index layer and the high refractive index layer are increased.

The ion-assisted acceleration current values and the atmospheric refractive indexes of the low refractive index layers and the high refractive index layers with respect to light having a wavelength of 500 nm, in the respective optical multilayer films, are as shown in the following [Table 2]. Regarding the optical multilayer films according to Examples A1 to A3 and Comparative Examples A1 and A2, the refractive indexes of the low refractive index layers (the first, third, and fifth layers) in the same Example are the same. The same applies to the high refractive index layers (the second and fourth layers).

**[Table 2]**

| | Ion-assisted acceleration current value | Refractive index | | 1.76 base heat resistance | 1.76 base luminous reflectance [%] |
|---|---|---|---|---|---|
| | | SiO₂ | ZrO₂ | | |
| Comparative Example A1 | None | 1.469 | 2.04 | 90°C, 5 min | 1.16 |
| Comparative Example A2 | 300 mA | 1.473 | 2.09 | 90°C, 30 min | 1.07 |
| Example A1 | 350 mA | 1.476 | 2.11 | 100°C, 10 min | 1.03 |
| Example A2 | 400 mA | 1.476 | 2.12 | 100°C, 30 min | 1.01 |
| Example A3 | 450 mA | 1.477 | 2.14 | 110°C, 30 min | 0.93 |

Then, for each of Examples A1 to A3 and Comparative Examples A1 and A2, spectral reflectance distribution near a visible region (e.g., a wavelength range of 400 nm to 780 nm) was measured by using a measuring machine, and heat resistance was examined by performing a heat resistance test as follows.

That is, first, samples of Examples A1 to A3 and Comparative Examples A1 and A2 were loaded into an oven that was set at 60°C. Measurement of the loading time was started simultaneously with loading of each sample into the oven. The measurement of the loading time was suspended at the elapse of every 5 minutes, and then the sample was taken out of the oven to visually check whether or not cracking occurred. The heat resistance test for each sample was ended at a time point when cracking occurred in the sample. On the other hand, when cracking did not occur, the sample was returned to the oven and measurement of the loading time was resumed. When the loading time for each temperature reached 30 minutes in total, loading of the sample at that temperature was ended, and the sample was loaded in an oven set at a one-stage (10°C) higher temperature, and then measurement of the loading time was started from the beginning.

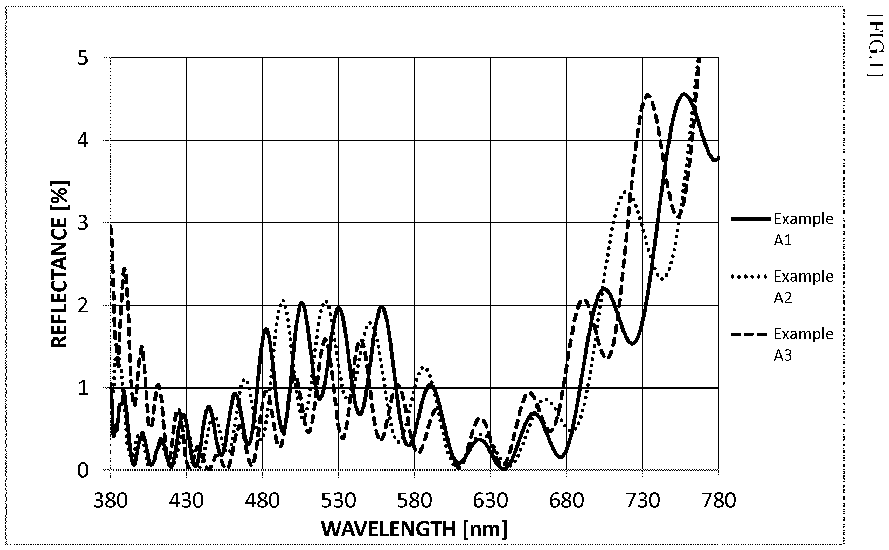

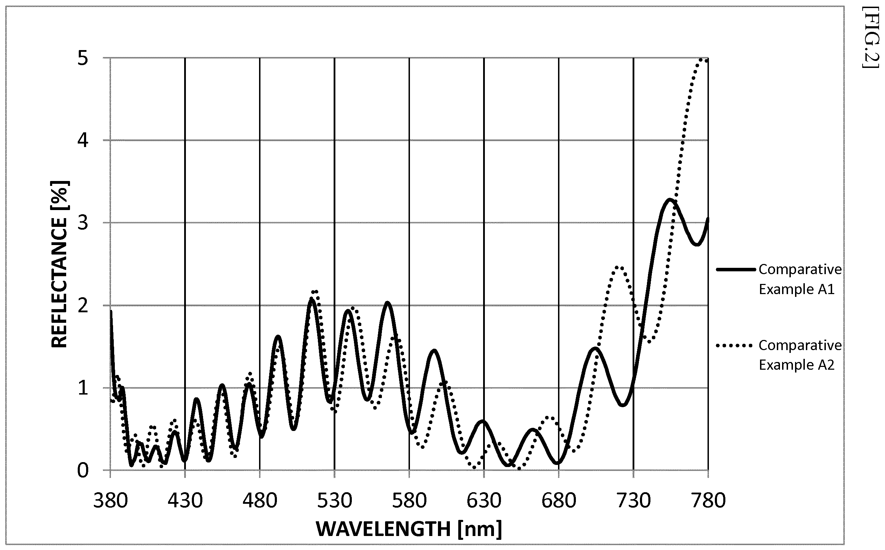

The spectral reflectance distributions of Examples A1 to A3 are shown in FIG. 1, and the spectral reflectance distributions of Comparative Examples A1 and A2 are shown in FIG. 2. The luminous reflectances of the respective samples are shown in the first column from the right in the above [Table 2].

In any Example, the reflectance is not greater than 2% in the wavelength range of 400 to 690 nm. Further, in any Example, the luminous reflectance is extremely low, that is, not greater than 1.16%. Even with the base (1.76 base) made of an episulfide resin having a high refractive index, advantageous antireflective performance is obtained.

The result of the heat resistance test is shown in the second column from the right in the above [Table 2].

In Comparative Examples A1 and A2, the results of the heat resistance test are "90°C, 5 min" and "90°C, 30 min", respectively, that is, cracking occurred at a temperature lower than 100°C, and therefore, the heat resistance is not relatively advantageous.

In contrast, regarding Examples A1 to A3, the result of Example A1 is "100°C, 10 min", and the results of Examples A2 and A3 are "100°C, 30 min" and "110°C, 30 min", respectively. Thus, each sample cleared the test at 90°C, and moreover, cleared the test at "100°C, 5 min", thereby providing excellent heat resistance.

From the above, in Comparative Examples A1 and A2, the atmospheric refractive index of each low refractive index layer is less than 1.476 and the atmospheric refractive index of each high refractive index layer is less than 2.11, and therefore, there is room for further improvement of the heat resistance although reflection is sufficiently prevented.

In contrast, in Examples A1 to A3, the atmospheric refractive index of each low refractive index layer is not less than 1.476 and the atmospheric refractive index of each high refractive index layer is not less than 2.11, whereby reflection is prevented, thus providing sufficient optical performance and excellent heat resistance.

### [Example B1 and Comparative Example B1]

Example B1 and Comparative Example B1 were produced so as to have the same structures, including the intermediate films and the physical thicknesses, as Example A1 and the like, except that ions used for ion-assisted vapor deposition were changed from ions based on oxygen gas to ions based on a mixture of argon gas and oxygen gas (flow ratio = 2:1).

By adjusting the ion-assisted acceleration current value, as shown in the following [Table 3], in Example B1, the atmospheric refractive index (wavelength of 500 nm) of the low refractive index layer is 1.480, and the atmospheric refractive index (wavelength of 500 nm) of the high refractive index layer is 2.11. Meanwhile, in Comparative Example B 1, the atmospheric refractive index of the low refractive index layer is 1.475, and the atmospheric refractive index of the high refractive index layer is 2.07.

**[Table 3]**

| | Ion-assisted acceleration current value | Refractive index | | 1.76 base heat resistance | 1.76 base luminous reflectance [%] |
|---|---|---|---|---|---|
| | | SiO₂ | ZrO₂ | | |
| Comparative Example B 1 | 200 mA | 1.475 | 2.07 | 100°C, 5 min | 0.91 |
| Example B1 | 300 mA | 1.480 | 2.11 | 110°C, 5 min | 0.96 |

Example B1 and the like were also subjected to measurement of spectral reflectance distribution and the heat resistance test.

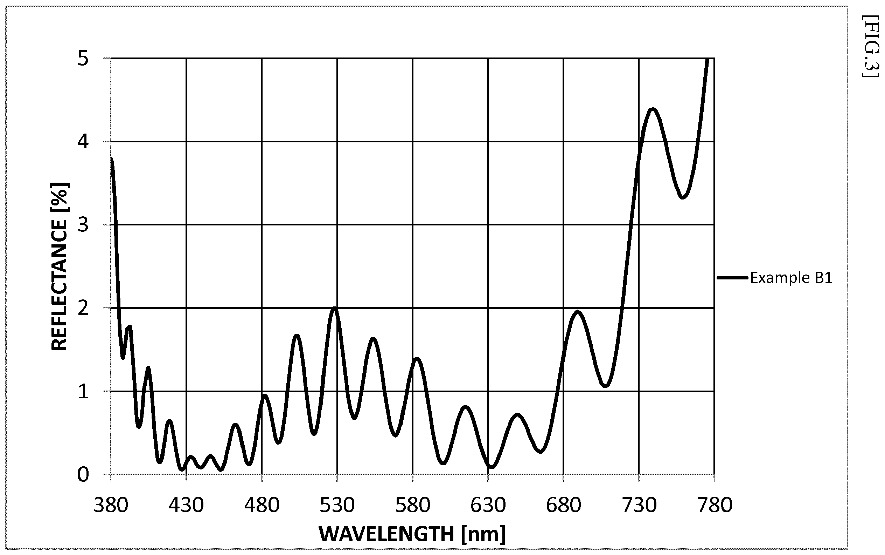

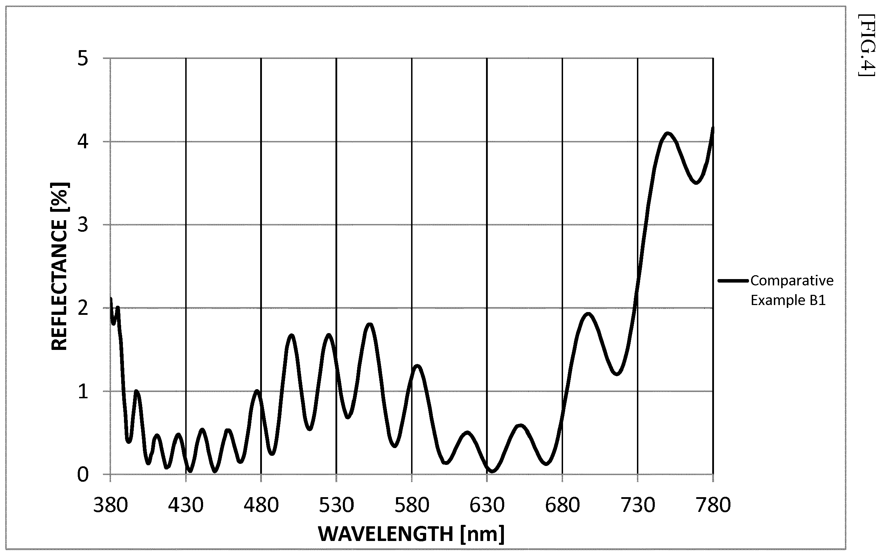

The spectral reflectance distribution of Example B1 is shown in FIG. 3, and the spectral reflectance distribution of Comparative Example B1 is shown in FIG. 4. The luminous reflectances of Example B1 and the like are shown in the first column from the right in the above [Table 3], and the results of the heat resistance test thereof are shown in the second column from the right in [Table 3].

In both Example B1 and Comparative Example B1, the reflectance is 2% throughout the wavelength range of 400 to 720 nm, and the luminous reflectance is not more than 1%, thereby providing excellent optical performance.

Regarding the heat resistance, in Comparative Example B1, the result of the heat resistance test is "100°C, 5 min", that is, cracking occurred during the first trial at 100°C, and therefore, the heat resistance is relatively low. Meanwhile, Example B1 withstood for 30 minutes at 100°C and the test was ended with the result of "110°C, 5 min", thereby providing excellent heat resistance.

It is understood from Examples A1 to A3 and Example B1 that both optical performance and heat resistance can be achieved regardless of whether the type of ions (introduced gas) used for the ion-assisted vapor deposition is oxygen gas or a mixture of argon gas and oxygen gas, which reveals that not the type of the introduced gas (ions) but the magnitude of the atmospheric refractive index of each layer is important. It is considered that, when the atmospheric refractive index of each layer becomes equal to or higher than a predetermined value, the optical multilayer film is formed with higher density, whereby heat resistance is improved without sacrificing optical performance.

### [Examples C1 to C4 and Comparative Examples C1 to C4]

Examples C1 to C4 were produced by forming bases and intermediate films in a similar manner to that for Example A1 and the like, and forming optical multilayer films having film structures shown in the following [Table 4]. Film structure 1 is a five-layer structure in which a layer closest to the base is a first layer that is a low refractive index layer, and the respective layers have physical thicknesses as shown in [Table 4]. Likewise, each of film structures 2 and 3 is a five-layer structure having a set of physical thicknesses shown in [Table 4]. Further, film structure 4 is a seven-layer structure having a set of physical thicknesses shown in [Table 4]. The low refractive index layers and the high refractive index layers of Examples C1 to C4 were formed under conditions equivalent to the ion-assist conditions of Example A1 such that, as shown in the following [Table 5], the atmospheric refractive index of each low refractive index layer was 1.476 and the atmospheric refractive index of each high refractive index layer was 2.11.

Meanwhile, Comparative Examples C1 to C4 were produced by changing only the atmospheric refractive indexes of the low refractive index layers and the high refractive index layers from those of Examples C1 to C4, respectively. The low refractive index layers and the high refractive index layers of Comparative Examples C1 to C4 were formed under conditions equivalent to the ion-assist conditions of Comparative Example A1 such that, as shown in the following [Table 6], the atmospheric refractive index of each low refractive index layer was 1.469 and the atmospheric refractive index of each high refractive index layer was 2.04.

**[Table 4]**

| | Material | Film structure 1 | Film structure 2 | Film structure 3 | Film structure 4 |
|---|---|---|---|---|---|
| | | Physical thickness [nm] | Physical thickness [nm] | Physical thickness [nm] | Physical thickness [nm] |
| First layer | SiO₂ | 155 | 48 | 73 | 23 |
| Second layer | ZrO₂ | 30 | 30 | 20 | 10 |
| Third layer | SiO₂ | 30 | 35 | 25 | 160 |
| Fourth layer | ZrO₂ | 40 | 40 | 100 | 29 |
| Fifth layer | SiO₂ | 95 | 100 | 85 | 19 |
| Sixth layer | ZrO₂ | - | - | - | 61 |
| Seventh layer | SiO₂ | - | - | - | 82 |
| Total of SiO₂ | | 280 | 183 | 183 | 283 |
| Total of ZrO₂ | | 70 | 70 | 120 | 100 |
| Total thickness | | 350 | 253 | 303 | 383 |

**[Table 5]**

| | Example C1 | Example C2 | Example C3 | Example C4 |
|---|---|---|---|---|
| Film structure | 1 | 2 | 3 | 4 |
| SiO₂ refractive index | 1.476 | | | |
| ZrO₂ refractive index | 2.11 | | | |
| 1.76 base heat resistance | ○ | ○ | ○ | ○ |
| Luminous reflectance [%] | 1.07 | 0.58 | 1.14 | 0.84 |

**[Table 6]**

| | Comparative Example C1 | Comparative Example C2 | Comparative Example C3 | Comparative Example C4 |
|---|---|---|---|---|
| Film structure | 1 | 2 | 3 | 4 |
| SiO₂ refractive index | 1.469 | | | |
| ZrO₂ refractive index | 2.04 | | | |
| 1.76 base heat resistance | × | × | × | × |
| Luminous reflectance [%] | 1.16 | 0.96 | 1.23 | 1.21 |

Example C1 and the like were also subjected to measurement of spectral reflectance distribution and the heat resistance test.

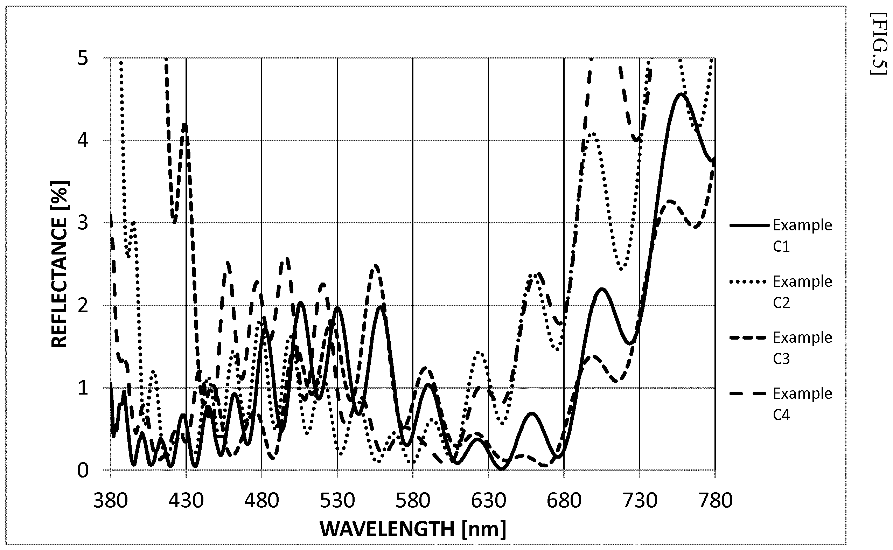

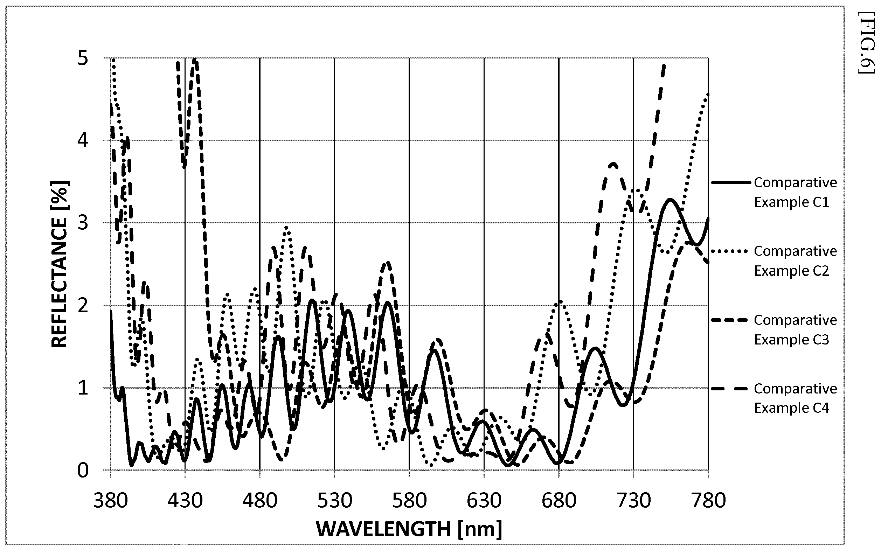

The spectral reflectance distributions of Examples C1 to C4 are shown in FIG. 5, and the spectral reflectance distributions of Comparative Examples C1 to C4 are shown in FIG. 6. The luminous reflectances of Examples C1 to C4 and Comparative Examples C1 to C4 are shown in the first rows from the bottoms of the above [Table 4] and [Table 5], respectively, and the results of the heat resistance test of Examples C1 to C4 and Comparative Examples C1 to C4 are shown in the second rows from the bottoms of the above [Table 4] and [Table 5], respectively. Regarding the results of the heat resistance test of Examples C1 to C4 and Comparative Examples C1 to C4, samples in which no cracking occurred even at "100°C, 5 min" (i.e., samples the test results of which are "100°C, 10 min" or longer) are indicated by "○" while samples in which cracking occurred before "100°C, 5 min" (i.e., samples the test results of which are "100°C, 5 min" or less) are indicated by "×".

In any of Examples C1 to C4 and Comparative Examples C1 to C4, the reflectance is not greater than 3% in the wavelength range of 435 to 650 nm, and the luminous reflectance is not greater than 1.23%, thereby representing sufficient antireflective performance.

Regarding heat resistance, none of Comparative Examples C1 to C4 clears "100°C, 5 min" (x), while any of Examples C1 to C4 clears "100°C, 5 min" (o).

Accordingly, in contrast to Comparative Examples C1 to C4, Examples C1 to C4 have excellent heat resistance while having sufficient optical performance.

Comparative Examples C1 to C4 have film structures 1 to 4, respectively, that is, have various film structures different from each other. However, Comparative Examples C1 to C4 have, in common, the atmospheric refractive index of each low refractive index layer being 1.469 and the atmospheric refractive index of each high refractive index layer being 2.04, and therefore, have relatively degraded heat resistance.

In contrast, although Examples C1 to C4 also have film structures 1 to 4, respectively, that is, have various film structures different from each other, since the atmospheric refractive index of each low refractive index layer is 1.476 and the atmospheric refractive index of each high refractive index layer is 2.11, heat resistance is improved in any film structure.

### [Examples D1 to D2 and Comparative Examples D1 to D2]

Examples D1 to D2 and Comparative Example D1 to D2 were produced by forming bases and intermediate films in a similar manner to that for Example A1 and the like, and forming optical multilayer films in a similar manner to that for Example A1 and the like except for the atmospheric refractive indexes of the respective layers.

The atmospheric refractive indexes (wavelength 500 nm) of the first to fifth layers in Examples D1 to D2 and Comparative Example D1 to D2 are shown in the following [Table 7]. In [Table 7], layers appended with "○" are formed under the same ion-assist conditions as those for Example A1, and among the layers, each low refractive index layer has an atmospheric refractive index of 1.476, and each high refractive index layer has an atmospheric refractive index of 2.11. Meanwhile, layers not appended with "○" are formed under the same ion-assist conditions as those for Comparative Example A1, and among the layers, each low refractive index layer has an atmospheric refractive index of 1.469, and each high refractive index layer has an atmospheric refractive index of 2.04. In [Table 7], the total of the physical thicknesses of the layers appended with "○" is indicated as "thickness satisfying predetermined refractive index", and the ratio of this thickness to the total thickness of the first to fifth layers is indicated as "thickness satisfying predetermined refractive index /total thickness".

**[Table 7]**

| | Material thickness | Physical thickness | Example D1 | Example D2 | Comparative Example D1 | Comparative Example D2 |
|---|---|---|---|---|---|---|
| First layer | SiO₂ | 155 | ○ | | | |
| Second layer | ZrO₂ | 30 | ○ | ○ | | |
| Third layer | SiO₂ | 30 | ○ | | | |
| Fourth layer | ZrO₂ | 40 | ○ | ○ | | ○ |
| Fifth layer | SiO₂ | 95 | ○ | | ○ | |
| Thickness satisfying predetermined refractive index [nm] | | | 350 | 70 | 95 | 40 |
| Thickness satisfying predetermined refractive index/total thickness [%] | | | 100% | 20% | 27% | 11% |
| 1.76 base heat resistance | | | ○ | ○ | × | × |
| Luminous reflectance [%] | | | 1.03 | 0.82 | 1.23 | 0.76 |

Example D1 is equivalent to Example A1. That is, throughout the total thickness, 350 nm, of the optical multilayer film, all the layers satisfy the predetermined refractive index, that is, the total of the thicknesses satisfying the predetermined refractive index is 350 nm, and the ratio is 100%.

In Example D2, the second and fourth layers as the high refractive index layers satisfy the predetermined refractive index, none of the low refractive index layers satisfies the predetermined refractive index, the total of the thicknesses satisfying the predetermined refractive index is 70 nm, and the ratio is 20%.

In Comparative Example D1, the fifth layer as the low refractive index layer satisfies the predetermined refractive index, the first to fourth layers do not satisfy the predetermined refractive index, the total of the thicknesses satisfying the predetermined refractive index is 95 nm, and the ratio is 27%.

In Comparative Example D2, the fourth layer as the high refractive index layer satisfies the predetermined refractive index, the first, second, third, and fifth layers do not satisfy the predetermined refractive index, the total of the thicknesses satisfying the predetermined refractive index is 30 nm, and the ratio is 11%.

Examples D1 to D2 and the like were also subjected to measurement of spectral reflectance distribution and the heat resistance test.

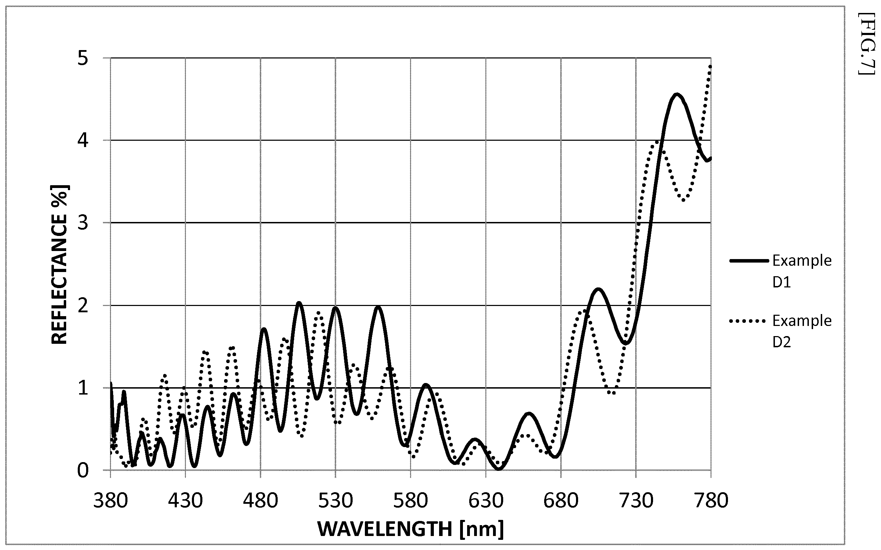

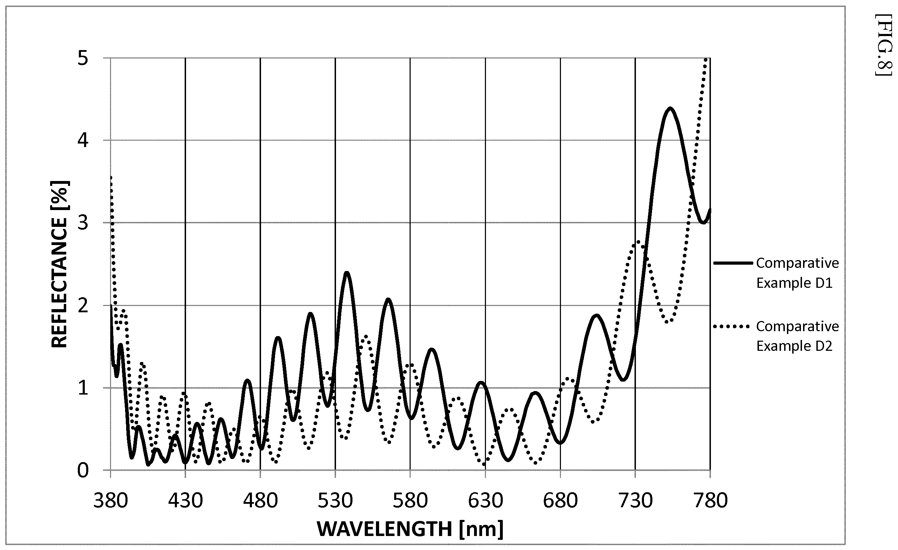

The spectral reflectance distributions of Examples D1 to D2 are shown in FIG. 7, and the spectral reflectance distributions of Comparative Examples D1 to D2 are shown in FIG. 8. Further, the luminous reflectances of Examples D1 to D2 and Comparative Example D1 to D2 are shown in the first row from the bottom in the above [Table 7], and the results of the heat resistance test thereof are shown in the second row from the bottom in [Table 7]. The results of the heat resistance test regarding Examples D1 to D2 and Comparative Example D1 to D2 are indicated in a similar manner to those of Example C1 and the like.

In any of Examples D1 to D2 and Comparative Example D1 to D2, the reflectance is not greater than 2.5% in the wavelength range of 400 to 720 nm, and the luminous reflectance is not greater than 1.23%, which reveals that each sample has sufficient antireflective performance.

Regarding heat resistance, in Example D1, the ratio of the thicknesses satisfying the predetermined refractive index to the total thickness is 100%, and "100°C, 5 min" is cleared (○). In Example D2, only the high refractive index layers satisfy the predetermined refractive index, the ratio of the thicknesses satisfying the predetermined refractive index to the total thickness is 20%, and "100°C, 5 min" is cleared (○).

Meanwhile, in Comparative Example 1, only the fifth layer as the low refractive index layer satisfies the predetermined refractive index, and the ratio of the thicknesses satisfying the predetermined refractive index to the total thickness is 27% that is higher than 20%, but "100°C, 5 min" is not cleared (x). In Comparative Example D2, only the fourth layer as the high refractive index layer satisfies the predetermined refractive index, the ratio of the thicknesses satisfying the predetermined refractive index to the total thickness is 11% that is less than 20%, and "100°C, 5 min" is not cleared (x).

From the above, when the aforementioned ratio is not less than 20% while each high refractive index layer satisfies the predetermined refractive index as in Example D2, it is possible to achieve both optical performance and heat resistance. Meanwhile, as in Comparative Example D1, even when the aforementioned ratio is not less than 20% (is 27%) while the low refractive index layer satisfies the predetermined refractive index, sufficient heat resistance cannot be achieved. Further, as in Comparative Example D2, even when the high refractive index layer satisfies the predetermined refractive index, if the aforementioned ratio is less than 20% (is 11%), sufficient heat resistance cannot be obtained. That is, in order to achieve both optical performance and sufficient heat resistance, it is necessary to form the high refractive index layers such that at least the total of the physical thicknesses of the high refractive index layers (zirconia) having the atmospheric refractive index not less than 2.11 is not less than 20% of the total physical thickness of the optical multilayer film, and it is preferable but not always necessary to make the atmospheric refractive indexes of the low refractive index layers (silica) not less than 1.476.

In any of Example A1 to D2 which satisfy both optical performance and sufficient heat resistance, the optical multilayer film is formed such that the total of the physical thicknesses of the high refractive index layers (zirconia) having the atmospheric refractive index not less than 2.11 occupies 20% or more of the total physical thickness of the optical multilayer film.

### [Conclusion and the like]

As in Examples A1 to D2, when the optical multilayer film is formed such that the total of the physical thicknesses of the high refractive index layers having the atmospheric refractive index (wavelength of 500 nm) not less than 2.11 occupies 20% or more of the total physical thickness of the optical multilayer film, it is possible to achieve both high-level optical performance and high-level heat resistance in the optical multilayer film. In the optical multilayer film, when the total number of the low refractive index layers and the high refractive index layers is less than 5, it is difficult to maintain excellent antireflective performance. The total number of the low refractive index layers and the high refractive index layers may be 5, 6, 7, or more. However, from the viewpoint of easily forming the optical multilayer film, the total number of the low refractive index layers and the high refractive index layers is preferably not larger than 20, and more preferably, not larger than 7.

Furthermore, when the low refractive index layers and the high refractive index layers are formed so as to satisfy the predetermined atmospheric refractive indexes (not less than 1.476 for the low refractive index layers, and not less than 2.11 for the high refractive index layers), it is possible to provide an optical product having an optical multilayer film which satisfies both high-level optical performance and high-level heat resistance in an extremely simple formation.

In order to realize the predetermined atmospheric refractive indexes at low cost, the low refractive index layers and the high refractive index layers are preferably formed by ion-assisted vapor deposition.

There is a limitation in increasing the atmospheric refractive indexes of the low refractive index layers and the high refractive index layers, from the viewpoint of cost, or deposition conditions or a formation method difficult to realize. When the atmospheric refractive index of the low refractive index layers is not more than 1.484 and the atmospheric refractive index of the high refractive index layers is not more than 2.18, deposition conditions and/or a formation method are easy to realize, and the cost is practical.

It is possible to produce spectacles having both heat resistance and antireflective performance in a visible region, by using the plastic lens according to any of Examples A1 to D2.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An optical product having an optical multilayer film formed on one or both of surfaces of a base, directly or via an intermediate film, wherein
the optical multilayer film is obtained by alternately layering low refractive index layers and high refractive index layers up to five layers or more in total,
the high refractive index layers include zirconium dioxide layers each having an atmospheric refractive index not less than 2.11 with respect to light having a wavelength of 500 nanometers, and
a total of physical thicknesses of the zirconium dioxide layers each having the atmospheric refractive index not less than 2.11 is not less than 20% of a total physical thickness of the optical multilayer film.

2. The optical product according to claim 1, wherein the low refractive index layers include silicon dioxide layers each having an atmospheric refractive index not less than 1.476 with respect to light having a wavelength of 500 nanometers.

3. The optical product according to claim 1 or 2, wherein the atmospheric refractive index, not less than 2.11, of the zirconium dioxide layers is not more than 2.18.

4. The optical product according to claim 2 or 3, wherein the atmospheric refractive index, not less than 1.476, of the silicon dioxide layers is not more than 1.484.

5. The optical product according to any one of claims 1 to 4, wherein the optical multilayer film comprises only silicon dioxide and zirconium dioxide.

6. The optical product according to any of claims 2 to 5, wherein the zirconium dioxide layers each having the atmospheric refractive index not less than 2.11 and the silicon dioxide layers each having the atmospheric refractive index not less than 1.476 are formed by ion-assisted vapor deposition.

7. A plastic lens using the optical product according to any one of claims 1 to 6.

8. Spectacles using the plastic lens according to claim 7.
